# EUROPEAN PATENT SPECIFICATION

(11) **EP 0 483 321 B1**
(45) Date of publication and mention of the grant of the patent: **15.11.1995**
(21) Application number: 91909353.4
(22) Date of filing: 06.05.1991
(51) Int. Cl.: H04N 1/40

(54) **APPARATUS AND METHOD FOR GREY LEVEL PRINTING USING A BINARY ARCHITECTURED PRINTHEAD**
VORRICHTUNG UND VERFAHREN FÜR GRAUWERTDRUCK UNTER ANWENDUNG EINES DRUCKKOPFES MIT BINÄRER ARCHITEKTUR
APPAREIL ET PROCEDE D'IMPRESSION DE NIVEAUX DE GRIS UTILISANT UNE TETE D'IMPRESSION A ARCHITECTURE BINAIRE

(30) Priority: 10.05.1990 US 521511; 07.11.1990 US 609868
(43) Date of publication of application: 06.05.1992
(60) Divisional application: 95106953.3
(73) Proprietor: EASTMAN KODAK COMPANY, Rochester, New York 14650-2201 (US)
(72) Inventor: NG, Yee, S., 343 State Street Rochester, N.Y. 14650 (US); YEH, Hurjay, Rochester, NY 14616 (US); BASILE, Joseph, Rochester, NY 14607 (US)
(74) Representative: Blickle, K. Werner, Dipl.-Ing.
(86) International application number: US9103089
(87) International publication number: WO9117627

(56) References cited:
- EP-A- 0 375 431
- WO-A-88/10042
- US-A- 4 074 319
- US-A- 4 525 729
- US-A- 4 855 760
- Journal of Imaging Technology, volume 12, no. 5, October 1986 (Springfield, US) I. Abiko et al.: "High printing quality LED printheads", pages 296-299, see section III; figures 1,3

## Description

### BACKGROUND OF THE INVENTION

### 1. Field of the Invention

The present invention relates to non-impact printing apparatus for recording using printheads having a plurality of recording elements such as a light-emitting diodes (LEDs) or the like.

### 2. Brief Description of the Prior Art

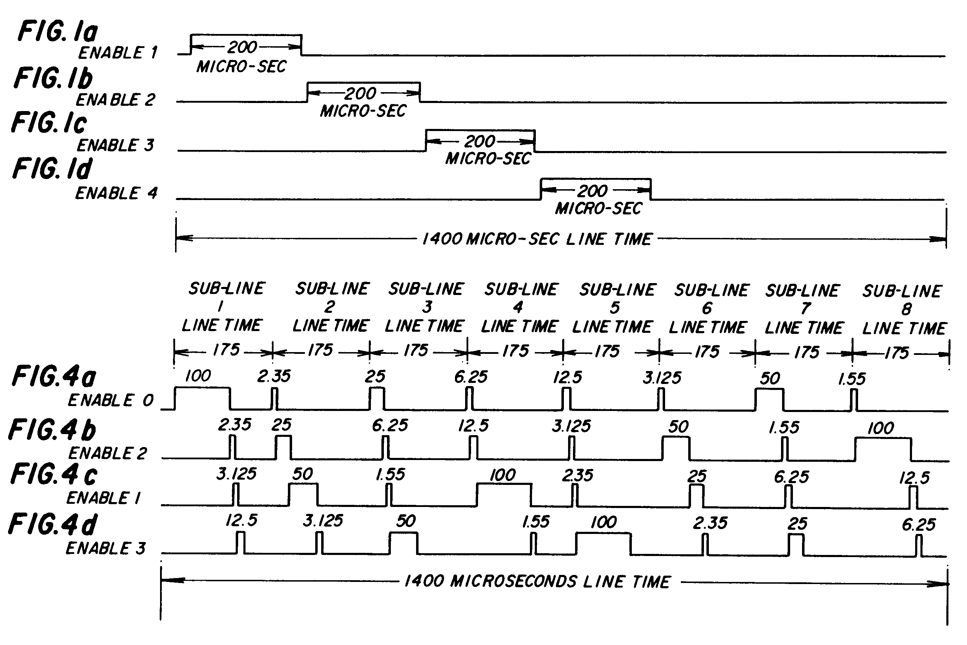

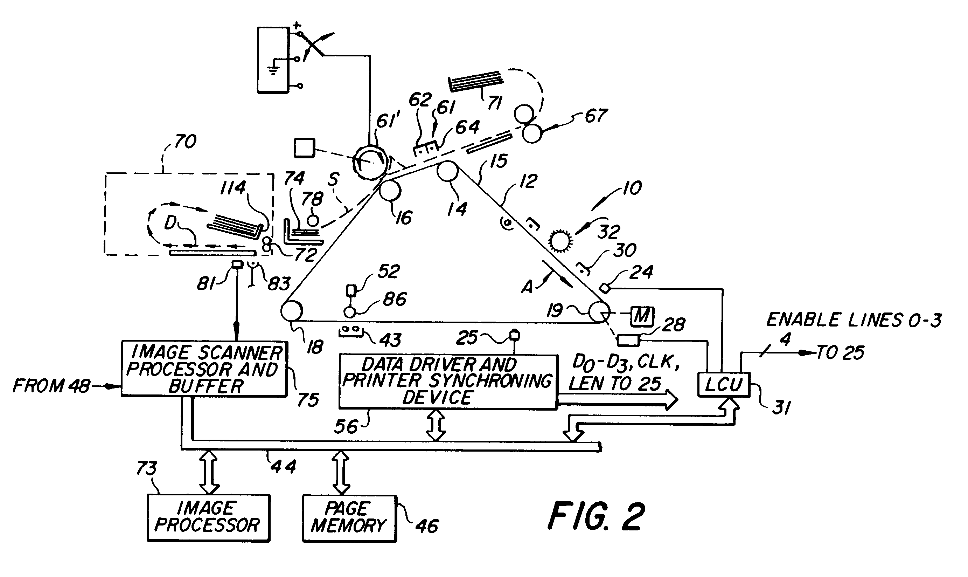

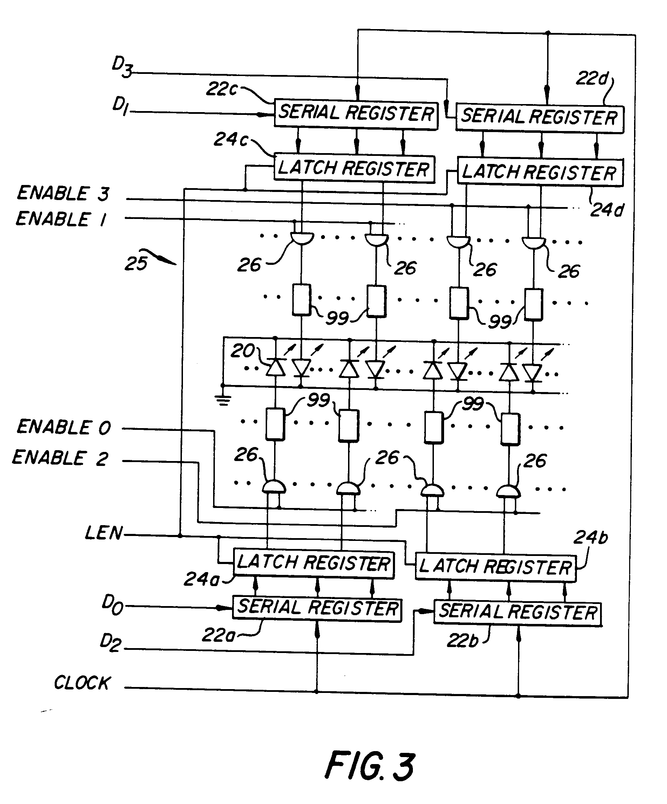

In order to reduce the cost of non-impact printheads such as LED printheads, modifications have been proposed to the design of the printheads to reduce the thermal load and current supply requirements of the printhead. In reducing the thermal load on a printhead, savings ensue by reducing the need for more expensive heat sinks and problems associated with nonuniformities in light emissions due to thermal gradients on the printhead may be avoided or reduced. Reduction in current supply requirements reduce the cost of the power supply as well as printhead electrical interconnects. In accordance with one such design a binary architectured printhead is provided with separate enable lines so that different segments of LED's may be enabled at different times during a time period for recording a line of pixels (picture elements). In this printhead all the LED's are arranged in a single straight line across the printhead. A line time for recording a row of pixels in a main scanning direction for a typical use with a photoconductive recording element is approximately 1400 microseconds (*m*s) (see FIG. 1) for an eight-page per minute printer. As noted in FIG. 1, the LED's to be enabled for recording during a particular line period are enabled in staggered fashion so that substantially no overlap results in enabling time. In FIG. 1, the exposure timing is shown for an LED printhead of 300 dots per inch (dpi) or 11.81 dots per mm which uses four independent enable lines for four printhead segments of LED's. As the requirement for exposure time per line at 300 dpi in this case is only 200 *m*s (with a system requiring 3 milliamps per pixel) and the line time for each 1/300th of an inch (1.31 x 10⁻³ cm) line spacing is as noted above 1400 ms one can spread out the four strobe enable pulses to have 200*m*s exposure durations for each segment without overlapping the exposure times. This concept then reduces the current supply requirement for the printhead.

It is also known to use binary architectured printheads for grey scale recording. In grey scale recording, pixels are created of different densities whereas in binary recording, a pixel is either created or not created. In a binary architectured printhead as the term is used herein, data for determining whether or not a recording element is turned on or off for its next enablement period is determined by a single image data bit. Known types of binary architectured printheads include driver chips that are provided with shift registers and latches for storing a single data bit for driving each LED for producing a single flash of light. The driver chips conventionally also include current driving circuitry for driving current to those LED's to be flashed during a period of time controlled by a strobe pulse timed by a suitable clock or by the presence of a data bit stored in a latch for driving the LED. While the LED is being driven or flashed in response to a data bit stored in the latch, a shift register on the driver chip may be receiving the next data bit for driving respective LED's for the next flash. Compare this with a grey level printer architecture, an example of which is illustrated in U.S. Patent US-A-4,750,010, (FIG. 6 thereof) wherein multiple lines for carrying data are required for each LED and multiple data bits are stored on the printhead for each LED before enabling the LED for its next enablement period. One reason for using a binary architectured printhead for grey level recording is that such printers have less data lines and registers for storing data and thus require fewer bonding pads and thereby are cost efficient to manufacture. Additionally, there is demand for such printheads by those incorporating same for use in binary printing applications as well as grey level printing applications, so manufacturing efficiencies based on production quantities may be passed along from the manufacturer of the printhead to the manufacturer of a printer incorporating this printhead. Ultimately, these savings can be passed along to purchasers of the printers.

An example of a binary architectured printhead that is used for grey level recording is described in U.S. Patent US-A-4,525,729. As taught in this patent, a multibit binary-weighted digital word representing a grey level pixel to be printed is shifted to a printhead one bit at a time so that a single bit for each LED is stored on the printhead just prior to enablement of the LED. An exposure clock signal enables those LED's having a respective data bit for a time period related to the binary weight of that data bit. As successive bits are shifted to the printhead, the time durations of the clock pulses changes accordingly until the pixel is printed in accordance with the appropriate digital word representing the pixel's grey level value. Where a pixel is represented by a six-bit digital word, six time periods of exposure are possible and a 63 levels of grey, including white, are realizable.

One problem associated with the use of binary architectured printheads for grey level recording is that during recording of the most significant data bit the printhead is drawing considerable current for a relatively lengthy duration thereby causing thermal gradients to arise on the printhead as not all LED's are enabled during every sub-line of recording. The use of staggering, as taught for the embodiment of FIG. 1 is impractical, as the sub-line used for recording the most significant bit would be too long during recording of the pixels in sub-lines as the image recording medium is moving.

It is therefore an object of the invention to provide for a grey level printer apparatus employing a binary architectured printhead wherein the problems of thermal loading are minimized and exposure periods made relatively shorter than suggested by the prior art.

### SUMMARY OF THE INVENTION

The above and other objects which will become apparent in reading the specification below are realized by a non-impact recording apparatus comprising:
a binary architectured printhead including
a) a plurality of recording elements;
b) a respective register means associated with each recording element for storing a single image data bit and cooperating in activating the respective recording element for a predetermined enablement time as determined by a strobe pulse;
c) means including a plurality of independent enable lines for carrying a plurality of strobe timing pulses ;
d) an enabling means for enabling a recording element in response to a data bit stored in the respective register means and to a strobe timing pulse;
e) means coupling a respective recording element to a respective enable line;

driving means for driving said binary architectured printhead to record grey level pixels using plural sub-lines to record each grey level pixel; said driving means including
a) means for generating a new set of sub-line binary data signals for each sub-line of recording and for conveying such signals to the printhead for storing in said respective register means; and
b) means for generating on each enable line a repeating series of strobe timing pulses, the series of pulses being a set of pulses of different durations for use in recording a grey level pixel, a pulse from the set being generated during a sub-line exposure period on each enable line and each enable line having a pulse from said set generated thereon that is a different duration than that generated on the other enabling lines during said sub-line recording period and wherein during a sub-line exposure period the respective pulses on the enabling lines are substantially nonconcurrent.

In accordance with another aspect of the invention, a non-impact recording apparatus comprises:
a binary architectured printhead including
(a) a plurality of recording elements, each for recording a pixel;
(b) a respective register means associated with each recording element for storing a single image data bit and cooperating in activating the respective recording element for a predetermined enablement time as determined by a strobe pulse;
(c) means for carrying a plurality of strobe timing pulses;
(d) an enabling means for enabling a recording element in response to a data bit stored in the respective register means and one of said strobe timing pulses;
(e) means coupling a respective recording element to said enabling means;

driving means for driving said binary architectured printhead to record grey level pixels using plural sub-lines to record each grey level pixel; said driving means including
a) means for generating a new set of sub-line binary data signals for each sub-line of recording and for conveying such signals to the printhead for storing in said respective register means; and
b) means for generating a repeating series of substantially binary weighted in time strobe timing pulses, the pulses in the set being arranged in time, out of binary weighted order, so that the longer duration strobe timing pulses of said set are directly followed by shorter duration strobe timing pulses of said set.

In accordance with still another aspect of the invention, a non-impact recording apparatus comprises:
a) a plurality of recording elements arranged in a single row with odd and even-numbered recording elements alternating in the row;
b) means for providing image data signals for use in enabling a recording element to record;
c) control means for providing strobe signals for use in enabling the recording elements to record for predetermined periods of time;
d) logic means for combining an image data signal and a strobe signal for causing a recording element to be enabled for recording; and
e) characterized in that the control means, during recording of a line provides strobe signals for the odd and even-numbered elements at different times so as to substantially not overlap in time.

### BRIEF DESCRIPTION OF THE DRAWINGS

FIG. 1 is a timing diagram illustrating strobe pulse signals on a binary architectured printhead of the prior art operating as a binary printer and during a sub-line of recording;
FIG. 2 is a schematic of a first embodiment of a grey level printer apparatus made in accordance with the invention;
FIG. 3 is a block diagram of circuitry of a binary architectured printhead of the prior art and used in the printer apparatus of FIG. 2;
FIG. 4 is a timing diagram illustrating strobe pulse signals on the binary architectured printhead of FIG. 3 but illustrating operation as a grey level printer during eight sub-lines of recording and being in accordance with the teachings of the invention; and
FIG. 5 is a block diagram of a circuit for formatting data to the printhead of FIG. 3 for operation in accordance with the invention.
FIG. 6 is a schematic of a second embodiment of a grey level printer apparatus made in accordance with the invention;
FIG. 7 is a block diagram of circuitry of a binary architectured printhead of the prior art and used in the printer apparatus of FIG. 6;
FIGS. 8a and 8b are timing diagrams illustrating strobe pulse signals on the binary architectured printhead of FIG. 7 but illustrating operation as a grey level printer in accordance with the invention during eight sub-lines of recording;
FIG. 9 is a block diagram of a circuit for formatting data to the printhead of FIG. 7 for operation in accordance with the invention; and
FIG. 10 is a diagram illustrating operation of the process look-up table in FIG. 9.

### DETAILED DESCRIPTION OF THE PREFERRED EMBODIMENTS

The apparatus of the preferred embodiment will be described in accordance with an electrophotographic recording medium. The invention, however, is not limited to apparatus for creating images on such a medium, as other media such as photographic film, thermal sensitive, etc., may also be used with the invention.

Because electrophotographic reproduction apparatus are well known, the present description will be directed in particular to elements forming part of, or cooperating more directly with, the present invention. Apparatus not specifically shown or described herein are selectable from those known in the prior art.

With reference now to FIG. 2, an electrophotographic reproduction apparatus 10 includes a recording medium or photoreceptor such as a photoconductive web 12 or other photosensitive medium that is trained about four transport rollers 14, 16, 18 and 19, thereby forming an endless or continuous web. Roller 19 is coupled to a driver motor M in a conventional manner. Motor M is connected to a source of potential when a switch (not shown) is closed by a logic and control unit (LCU) 31. When the switch is closed, the roller 19 is driven by the motor M and moves the web 12 in a clockwise direction as indicated by arrow A. This movement causes successive image areas or image frames of the web 12 to sequentially pass a series of conventional electrophotographic work stations of the reproduction apparatus.

For the purposes of this disclosure, several work stations are shown along the web's path. These stations will be briefly described.

First, a charging station 30 is provided at which the photoconductive surface 15 of the web 12 is sensitized by applying to such surface a uniform electrostatic primary charge of a predetermined voltage. The output of the charger may be controlled by a grid connected to a programmable power supply (not shown). The supply is, in turn, controlled by the LCU 31 to adjust the voltage level Vo applied onto the surface 15 by the charger 30.

At an exposure station an electrostatic image is formed by modulating the primary charge on an image area of the photoconductive surface with selective energization of point-like radiation sources in accordance with signals provided by a data source to be described. The point-like radiation sources are supported in a printhead 25 also to be described in more detail below.

A development station 43 includes developer which may consist of iron carrier particles and electroscopic toner particles with an electrostatic charge opposite to that of the latent electrostatic image. Developer is brushed over the photoconductive surface of the web 12 and toner particles adhere to the latent electrostatic image to form a visible toner particle, transferable image. The development station may be of the magnetic brush type with one or two rollers. Alternatively, the toner particles may have a charge of the same polarity as that of the latent electrostatic image and develop the image in accordance with known reversal development techniques.

The apparatus 10 also includes a transfer station 61 shown with a pair of corona chargers 62, 64 at which the toner image on web 12 is transferred in register to a copy sheet S; and a cleaning station 32, at which the photoconductive surface of the web 12 is cleaned of any residual toner particles remaining after the toner images have been transferred. After the transfer of the unfixed toner images to a copy sheet S, such sheet is transported to a heated pressure roller fuser 67 where the image is fixed to the copy sheet S and the sheet is then transported to a tray 71. Suitable means such as a transfer drum 61' may be provided for duplex operation in accordance with known techniques.

As shown in FIG. 1, a copy sheet S is fed from a supply 74 by driver roller 78, which then urges the sheet to move forward onto the web 12 in alignment with a toner image.

To coordinate operation of the various work stations with movement of the image areas on the web 12 past these stations, the web has a plurality of indicia such as perforations along one of its edges. These perforations generally are spaced xequidistantly along the edge of the web 12. At a fixed location along the path of web movement, there is provided suitable encoding means 24 for sensing web perforations. This sensing produces input signals into the LCU 31 which has a digital computer, preferably one or more microprocessors. The LCU has a stored program responsive to the input signals for sequentially actuating, then de-actuating, the work stations as well as for controlling the operation of many other machine functions. Additional encoding means 28 may be provided as known in the art for providing more precise timing signals for control of the various functions of the apparatus 10 as will be described below.

Programming of a number of commercially available microprocessors is a conventional skill well understood in the art. This disclosure is written to enable a programmer having ordinary skill in the art to produce an appropriate control program for the one or more microprocessors used in this apparatus. The particular details of any such program would, of course, depend on the architecture of the designated microprocessor(s).

With reference to both FIGS. 2 and 3, the printhead 25, as noted, is provided with a multiplicity of energizable point-like radiation sources 20, preferably light-emitting diodes (LED's). Optical means (not shown) may be provided for focusing light from each of the LED's onto the photoconductive surface. The optical means preferably comprises an array of optical fibers such as sold under the name Selfoc, a trademark for a gradient index lens array sold by Nippon Sheet Glass, Limited. Due to the focusing power of the optical means, a row of emitters will be imaged on a respective transverse line on the recording medium.

With reference to FIG. 3, the printhead 25 comprises a suitable stationary support with a series of LED chip arrays mounted thereon. As is well known, each of the LED chip arrays includes, for example, 128 LED's arranged in a single row. These chips are also arranged end-to-end in a row and where thirty-eight LED chip arrays are so arranged, the printhead will extend across the width of the web 12 and include 4864 LED's arranged in a single row. To each side of this row of LED's there may be provided, for example, thirty-eight identical driver chips. Each of these driver chips include circuitry for addressing the logic associated with each of 64 LED's to control whether or not each of the LED's should be energized as well as current driver circuitry 99 to control the level of current to each of the LED's controlled by that driver chip. Two driver chips are thus associated with each LED chip array. Each of the two driver chips will be coupled for driving of alternate LED's, i.e., one of the driver chips will drive the even numbered LED's and the other driver chip will drive the odd numbered LED's in a particular LED chip array. Thus, one driver chip will drive the 64 odd numbered LED's of the 128 LED's in the array and the other driver chip will drive the 64 even numbered LED's of these 128 LED's. Only some of the LED's are illustrated in FIG. 3, it being understood that many more LED's are present. The driver chips on each side of the printhead are suitably coupled together in groups to serially shift data between those in a group. Thus, shift register 22a represents the combination of the shift registers in 19 driver chips.

As may be noted in FIG. 2, the original document sheet D forms a part of a multisheet document supported in a recirculating feeder tray 70. A vacuum drive roller (not shown) under control of the LCU feeds the document D face down through metering rollers 72 which are adapted to feed the document D past an image scanning head 81 formed of say a conventional CCD array and provide signals to a conventional image scanner processor and buffer indicative of the movement of the sheet. A lamp 83 provides a narrow line of illumination, upon the document D and reflections thereof off the document D are sensed by the image scanning array to provide signals indicative of density information thereon. This output of the image scanner array is fed to the image scanner processor and buffer 75.

The data representing the scanned image on document D are fed over bus 44 to an image processor 73. The image processor processes this data and formats same in accordance with well known techniques and the output thereof is fed over to a page memory 46 wherein a page of rasterized data to be printed is stored. The apparatus may also include a raster image processor that rasterizes data from a computer.

In response to pulses from encoders 24 and 28 identifying a new image frame on a photosensitive web, the LCU provides an output signal to the Page Memory to remove one line of data. This data is fed to an output device for formatting the data and synchronizing the operation thereof. This output device is illustrated by the data driver and printer synchronizing device 56.

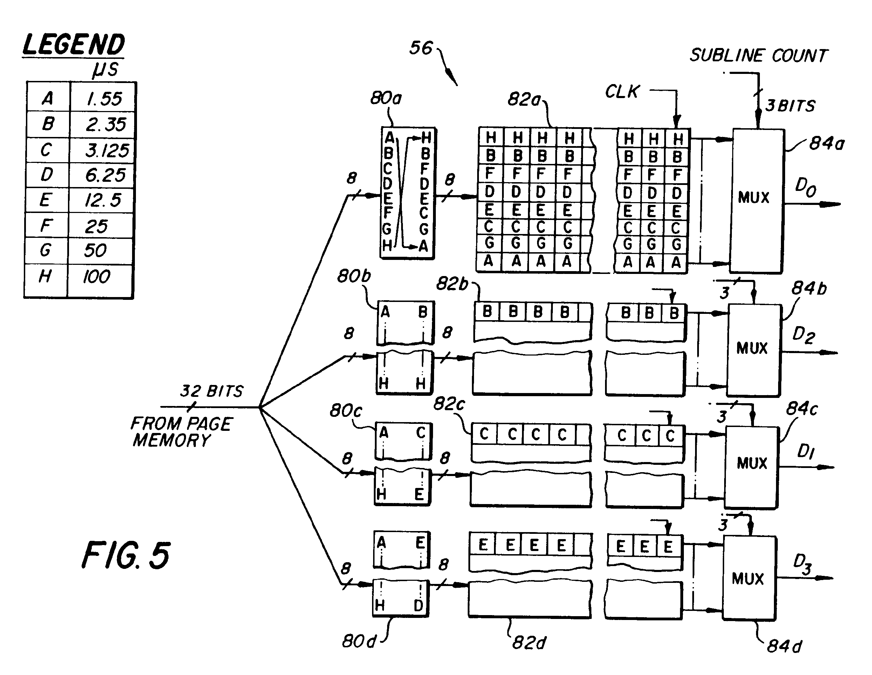

With reference now to FIG. 5, the LCU may be programmed to remove rasterized data from the page memory by "pulling" four eight-bit words at a time representing grey level data for four pixels. The four pixels are associated with four independent segments of the LED printhead that are served by the four data lines D₀-D₃. For example, the four segments of the printhead may comprise the even-numbered LED's 0-2430 of a first half of the printhead, the odd-numbered LED's 1-2431 of the first half of the printhead, the even-numbered LED's 2432-4862 of the second half of the printhead and the odd-numbered LED's 2433-4863 of the second half of the printhead. This 32-bit word is then divided into its 8-bit components and reformatted such as by a hardwired arrangement 80a-d to arrange the data for acceptance by multibit shift registers 82a-d in the proper format for shifting to the shift registers on the printhead. In the table of FIG. 5, letters A-H represent the time duration weighting of the data bits with the exposure times indicated. With reference to FIG. 4, it may be seen that for sub-line #1, all the even-numbered LED's in the first half of the printhead are to be enabled for 100*m*s if their data bit indicates they are to be enabled for this period. Thus, as shown in register 82a in the first row there are 1216 data bits H to be shifted to serial register 22a (FIG. 3); these data bits are each a binary 1 or 0 indicating whether or not the respective LED is to be enabled for 100*m*s. Similarly, as may be seen in FIG. 4 on enable line 0 the next enable pulse for sub-line #2 is 2.35*m*s indicated by the letter B. As may be noted in FIG. 5, in the second row of shift register 82a there is stored the 1216 data bits B for the even numbered LED's in the first half of the printhead and for printing the sub-line #2. Multiplexers 84a-d are responsive to a sub-line count signal from the LCU for selecting the output from the appropriate row of each respective shift register 82a-d. The multibit shift registers for lines Dₒ-D₃ have their data formatted in the order suitable for exposure in accordance with the timing diagram of FIG. 4.

This data is carried over lines, indicated in FIG. 3 by lines D₀-D₃, and is fed under clock control to an appropriate serial data shift register 22a, 22b, 22c and 22d until 4864 bits of data, one for each of the LED's, is stored in the serial registers for the odd and even numbered LED's. Upon a latch enable (LEN) signal from the LCU, the data is shifted in parallel to latch registers 24a, 24b, 24c and 24d enabling the next sub-line of data to be introduced into the serial shift registers. In response to an encoder pulse or other suitable pulse indicating the timing for firing the next sub-line for printing, the LCU provides a series of timed strobe signals.

The strobe signals are provided by the LCU over the enable lines 0-3 as shown in FIG. 4. It will be noted from this timing diagram that relatively long pulses such as the 100*m*s pulse on enable line #0 (sub-line 1) are followed by shorter duration pulses on enable lines 1-3 during sub-line #1. It may be noted that the exposure duration for each sub-line is kept relatively short by arranging the series of strobe pulses so that the longest pulse on each sub-line is greater than the sum of the pulses on these other enable lines for that sub-line period. Although this relationship of exposure times is not necessary to practice the invention, it provides the most effective way to use the line time available for exposure to minimize current requirements. It may also be noted that the pulse durations are generally binary weighted with the lower exposure durations being increased to avoid exposure times that are too short for activating LED's which have minimum rise time and fall time requirements.

One preferred arrangement of order of the strobe signals on enable lines #0-3 is to enable the even-numbered LED's on the first half of the printhead, then the even-numbered LED's on the second half of the printhead, then the odd-numbered LED's on the first half of the printhead and then the odd-numbered LED's on the second half of the printhead. Heating of the printer due to current pulsing of the LED's is minimized with this arrangement. In addition, the straightness of a printed line in the cross-track (main scanning) direction can be ensured since there will only be 1/2400˝ (1.64 x 10⁻⁴cm) separation between a line of recorded sub-pixels formed in one-half of the printhead versus a line of sub-pixels recorded in a second half of the printhead. Furthermore, the order of the sub-line exposures as indicated in FIG.4, both for exposures in the in-track direction (successive exposures by one LED using say enable line #0) and cross-track direction will help the sub-pixels' process stability by intermixing high exposure sub-pixels with low exposure sub-pixels adjacent to it.

The enable lines 0-3 are fed to one input of a respective logic AND gate 26 associated with each LED. The other input of AND gate 26 is provided with a data bit from the latch register representing whether or not a sub-dot or sub-pixel is to be printed at this time. Assuming a sub-dot is to be printed, a respective LED is enabled for a time period predetermined by the strobe signal for that sub-line. In this regard, enablement of an LED 20 comprises driving of current through the LED by for example a transistor controlled current driver 99 of conventional circuitry to cause the LED to generate illumination.

The invention has been illustrated with regard to a printhead having a plural number N of point-like recording elements (LED's) per inch exemplified by the N=300 dpi printhead described herein and a control for exposing M lines (M = 300 dpi) of grey level pixels per inch in the sub-scanning direction by use of L sub-lines, exemplified by L=8, for each grey level pixel. Thus, encoder signals are provided at the rate of 1/2400 per inch (1.64x10⁻⁴ cm) of travel of the web 12 for recording P = L x M (2400 in this example) sub-lines per inch in the sub-scanning direction.

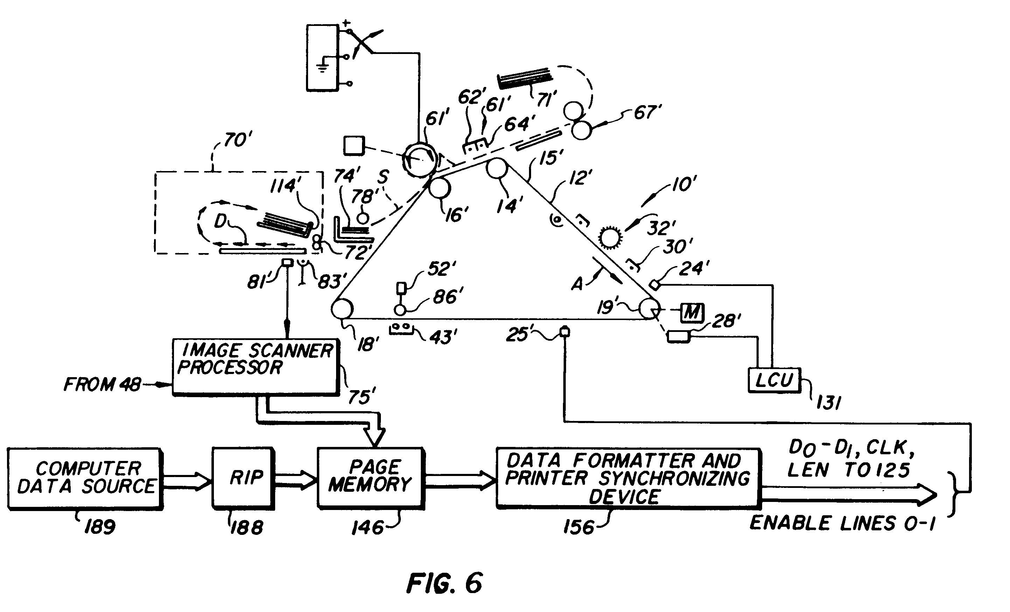

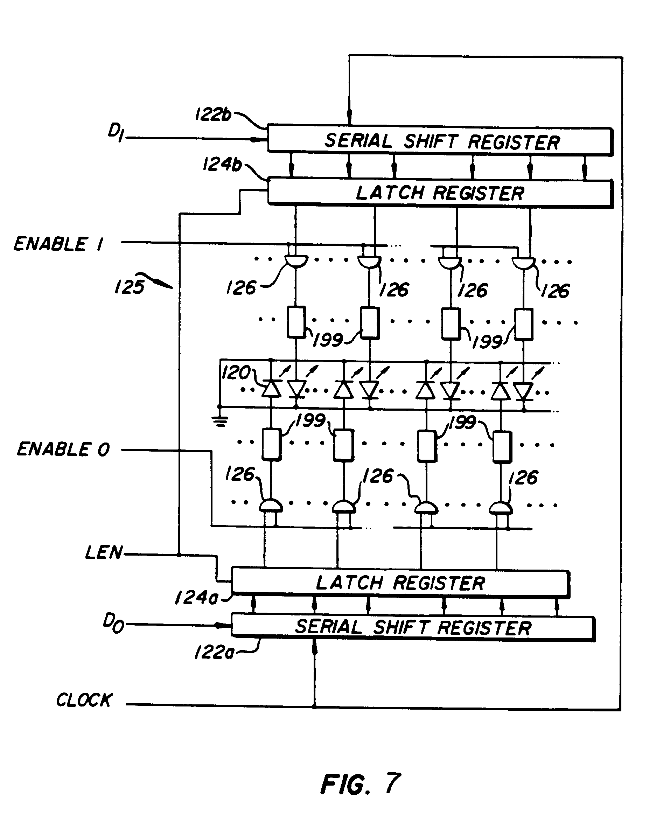

Description will now be provided with regard to the embodiment of FIGS. 6-10 wherein structure or apparatus that is similar and which functions similarly to that described for the first embodiment is indicated with a prime (′). With reference to both FIGS. 6 and 7, the printhead 125, as noted, is provided with a multiplicity of energizable point-like radiation sources 120, preferably light-emitting diodes (LED's). Optical means (not shown) may be provided for focusing light from each of the LED's onto the photoconductive surface. The optical means as noted above preferably comprises an array of optical fibers such as sold under the name Selfoc, although other optical means such as lenses may be used. Due to the focusing power of the optical means, a row of emitters will be imaged on a respective transverse line on the recording medium.

With reference to FIG. 7, the printhead 125 comprises a suitable stationary support with a series of LED chip arrays mounted thereon. As is well known, each of the LED chip arrays includes, for example, 96 LED's arranged in a single row. These chips are also arranged end-to-end in a row and where twenty-seven LED chip arrays are so arranged, the printhead will extend across the width of the web 12′ and include 2592 LED's arranged in a single row. To each side of this row of LED's there may be provided, for example, twenty-seven identical driver chips. Each of these driver chips include circuitry for addressing the logic associated with each of 48 LED's to control whether or not each of the LED's should be energized as well as current driver circuitry 199 to control the level of current to each of the LED's controlled by that driver chip. In this example, two driver chips are thus associated with each LED chip array. Each of the two driver chips will be coupled for driving of alternate LED's, i.e., one of the driver chips will drive the even numbered LED's and the other driver chip will drive the odd numbered LED's in a particular LED chip array. Thus, one driver-chip will drive the 48 odd numbered LED's of the 96 LED's in the array and the other driver chip will drive the 48 even numbered LED's of these 96 LED's. Only some of the LED's are illustrated in FIG. 7, it being understood that many more LED's are present. The driver chips on each side of the printhead are suitably coupled together in groups to serially shift data between those in a group. Thus, shift register 122a represents the combination of the shift registers in 27 driver chips.

As may be noted in FIG. 6, the original document sheet to be copied D forms a part of a multisheet document supported in a recirculating feeder tray 70′. A vacuum drive roller (not shown) under control of the LCU feeds the document D face down through metering rollers 72′ which are adapted to feed the document D past an image scanning head 81′ formed of say a conventional CCD array and provide signals to a conventional image scanner processor 75′ indicative of the movement of the sheet. A lamp 83′ provides a narrow line of illumination, upon the document D and reflections thereof off the document D are sensed by the image scanning array to provide signals indicative of density information thereon. This output of the image scanner array is also fed to the image scanner processor 75′.

The data representing the scanned image on document D is processed by the image scanner processor in accordance with well known techniques and the output thereof is fed over to a page memory 146 wherein a page of rasterized data to be printed is stored. The printer apparatus may also include a raster image processor (RIP) 188 that rasterizes data from a computer 189 or word processor. This rasterized data represents the grey level of each pixel to be recorded and, in the case of a color copier or printer, may contain data bits indicating the color that it is to be printed in. This data, however, must be modified before printing so that it is modified for the particular process conditions of this printer and for the characteristics of the particular LED's that will be used to record the particular pixels of data.

In response to pulses from encoders 24′ and 28′ identifying a new image frame on a photosensitive web, the LCU 131 provides an output signal via a memory controller to the Page Memory to remove one line of data. This data is fed to a printer output device 156 for formatting the data and synchronizing the operation thereof. This output device is illustrated by the data formatter and printer synchronizing device 156.

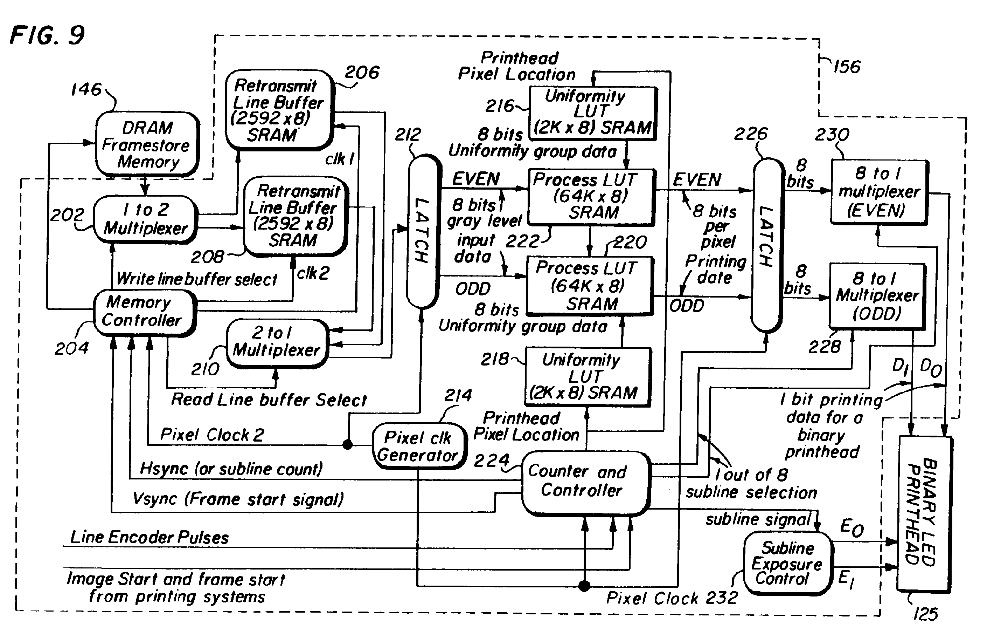

With reference now to FIG. 9, the LCU may be programmed to remove rasterized data from the page or framestore memory 146 by "pulling" two 8-bit words at a time representing grey level data for two pixels.

This rasterized data represents information in multibit digital form for each pixel. But where the data is required to be modified to the specific printer, further modifications to the data will be made as discussed below before sending same to the printer.

This data is stored in one of two re-transmit line buffers 206,208 in response to signals from a memory controller 204. A multiplexer 202 controls which of the buffers is operative to store the particular line of pixel data. Eventually, one line of pixel data is stored in the buffer, say buffer 206, and the next line of data is then stored in the other buffer 208. The storage of the data in each of the buffers is such that they are in an order that they can be clocked out last pixel first, i.e., the two 8-bit words for the last and the next to the last LED's on the printhead are clocked out first, while the two 8-bit words for the first and second LED's of the printhead are clocked out last. A second multiplexer 210 controls which of the line buffers outputs are to be transmitted to a 16-bit latch 212. Clock pulses (clk 1, clk 2) for respectively clocking out the data from the buffers 206, 208 may be synchronized with the encoder of the printhead while the clock pulses for loading the data into the buffers are synchronized or controlled by a system clock. This approach allows data movement directly to the printhead in synchonization with the movement of web 12′ which may vary due to changes of speed; i.e., flutter, etc. When the latch 212 receives the two 8-bit signals, it is then shifted to the output thereof wherein each 8-bit word provides an address in a corresponding process look-up table 220, 222 of a 64Kx8 SRAM. A further respective 8-bit address is provided to each look-up table 220, 222 by a uniformity look-up table 216, 218 which defines the brightness characteristic for the particular LED that is to print that particular pixel. Note in the example provided herein that odd and even pixel data are handled simultaneously with the data representing the adjacent odd and even pixels. A pixel clock generator 214 provides pulses to a counter and controller 224. The output of the counter 224 represents the pixel location of a particular pair of adjacent LED's. The initial count may represent simultaneously the last odd and even LED's. This count is then input into each of two uniformity look-up tables 216, 218 which stores correction data for that particular LED of that pair as an 8-bit word representing 256 levels of correction. The two 8-bit outputs of the two process look-up tables 220, 222 are then latched in latch 226.

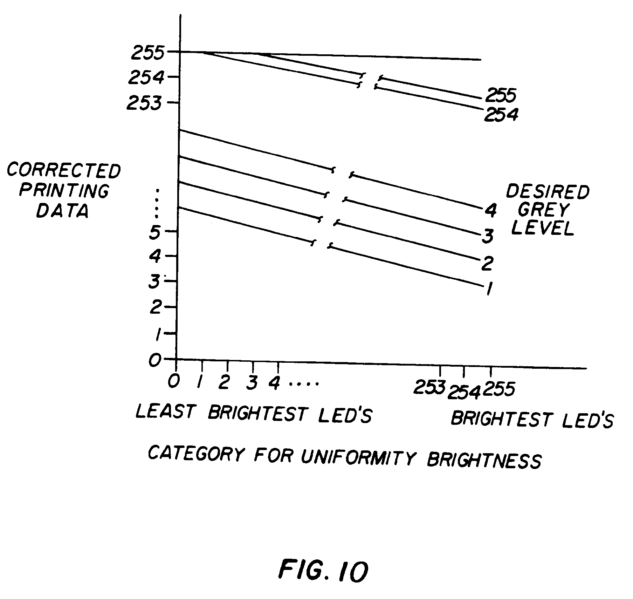

As may be seen in FIG. 10, which represents a graphical explanation of the contents of the process look-up tables 220,222, the 8-bit word representing uniformity correction can represent a grading of the LED's into 256 categories according to their respective brightness levels. As is known even though the same current be driven through each LED, LED's respond differently and their light outputs vary. Some may be brighter than others with the very brightest being assigned category 255 and the least brightest being assigned category 0. Each 8-bit data signal from latch 212 identifies which desired grey level line is to be used to determine the corrected printing data. The 8-bit corrected pixel print data is then known once the category for the particular LED is identified and the grey level for the uncorrected grey level data is known.

The table 222 provides a reasonable approximation for correction. In theory, the desired grey level of exposure, Cⱼ, for grey level "j" should be in accordance with the following equation Bᵢ x Tᵢⱼ = Cⱼ where Bᵢ is the brightness of a particular LED "i" and Tᵢⱼ is the required exposure time for an LED of brightness Bᵢ to form an exposure Cⱼ. The grey levels Cⱼ may be noted empirically by recording with each LED and identifying the time period Tᵢⱼ required to record each of the various grey levels. The LED's can then be grouped into appropriate categories of brightness and a look-up table memory created to approximate the print duration by assigning an 8-bit corrected printing data signal for each grey level for each of the particular categories or groups of brightness to which LED's have been assigned.

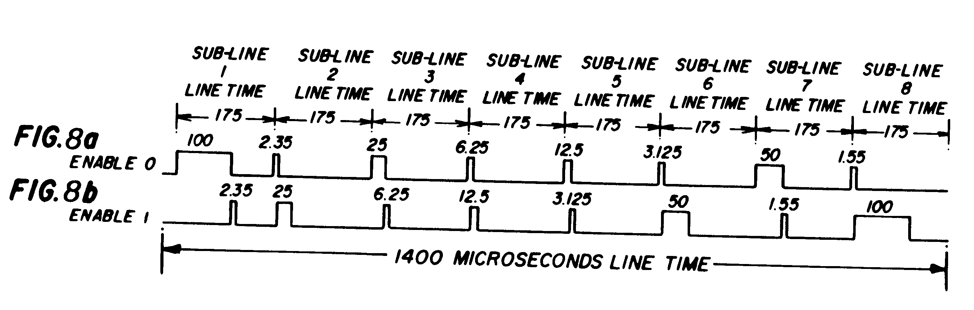

The two 8-bit words latched by the latch 226 represent the corrected exposure times for one odd and one even LED for recording a single pixel by each. Each of the latched 8-bit words are output from the latch 226 to a respective 8 to 1 multiplexer 228,230 which selects one of the 8-bits from each word in accordance with a signal from the counter and controller 224. For each subline a different one of the 8-bits is selected by each of the 8 to 1 multiplexers 228,230 in accordance with a change in a respective 3-bit count signal from the counter and controller 224. For each subline, the re-transmit line buffer 206,208 transmits the same line of data in 16-bit word increments and this entire line of pixel data is re-transmitted eight times with the grey level input data for each pixel being corrected each time and transmitted to the latch 226. Since the enable lines (see FIGS. 7 and 8a,b) have a different sequence of exposure, the signals from the counter and controller 224 to the respective 8 to 1 multiplexer 228,230 will be different to select a different order of bits from the odd and even pixel data.

Each of these one-bit data signals is carried over respective lines, indicated in FIG. 7 by data lines D₀-D₁, and is fed under clock control to an appropriate serial data shift register 122a, 122b until 2592 bits of data, one for each of the LED's, is stored in the serial registers for the odd and even numbered LED's. Upon a latch enable (LEN) signal from the LCU, the data is shifted in parallel to latch registers 124a, 124b, enabling the next sub-line of data to be introduced into the serial shift registers 122a, 122b. In response to an encoder pulse or other suitable pulse indicating the timing for firing the next sub-line for printing, the counter 224 provides a series of timed strobe signals over lines Enable 0 and Enable 1.

The strobe signals are provided by the counter and controller 224 as are a series of sublines dividing each line into equal time periods through generation of Hsync pulses, over the enable lines Enable 0, Enable 1 as shown in FIG. 8. It will be noted from this timing diagram that a relatively long pulse such as the 100*m*s pulse on strobe line Enable 0 (sub-line 1) is followed by a shorter duration pulse on strobe line Enable 1 during sub-line #1. It may be noted that the pulse durations are generally binary weighted in time duration with the lowest exposure durations being increased to avoid exposure times that are too short for activating LED's which have minimum rise time and fall time requirements.

In the embodiment of FIGS. 2-5, there is disclosed the use of 4 enable lines wherein during a subline of exposure, the even-numbered LED's on the first half of the printhead are enabled, then the even-numbered LED's on the second half of the printhead, then the odd-numbered LED's on the first half of the printhead and then the odd-numbered LED's on the second half of the printhead. Heating of the printer due to current pulsing of the LED's is minimized with this arrangement. In addition, the straightness of a printed line in the cross-track (main scanning) direction can be ensured since there will only be 1/2400˝ separation between a line of recorded sub-pixels formed in one-half of the printhead versus a line of sub-pixels recorded in a second half of the printhead. In the embodiment of FIGS. 6-10, a further advantage of mixing the enable times of the odd and even pixels results in better straightness compared with enabling one-half of the printhead at one time and then the second half at another time. Furthermore, the order of the sub-line exposures as indicated in FIG. 8, both for exposures in the in-track direction (successive exposures by one LED using say strobe line Enable 0) and cross-track direction will help the sub-pixels' process stability by intermixing high exposure sub-pixels with low exposure sub-pixels adjacent to it.

The strobe lines Enable 0, Enable 1 are fed to one input of a respective logic AND gate 126 associated with each LED. The other input of AND gate 126 is provided with a data bit from the latch register representing whether or not a sub-dot or sub-pixel is to be printed at this time. Assuming a sub-dot is to be printed, a respective LED is enabled for a time period predetermined by the strobe signal for that sub-line. In this regard, enablement of an LED 120 comprises driving of current through the LED by for example a transistor controlled current driver 199 of conventional circuitry to cause the LED to generate illumination.

The second embodiment of the invention has also been illustrated with regard to a printhead having a plural number N of point-like recording elements (LED's) per inch exemplified by the N=300 dpi printhead described herein and a control for exposing M lines (M = 300 dpi) of grey level pixels per inch in the sub-scanning direction by use of L sub-lines, exemplified by L=8, for each grey level pixel. Thus, encoder signals are provided at the rate of 1/300 per inch and are further divided by the counter and controller 124 to 1/2400 per inch (1.64 x 10⁻⁴cm) of travel of the web 12 for recording P = L x M (2400 in this example) sub-lines per inch in the sub-scanning direction. One can even use coarser encoder pulses like 100 per inch and generate the finer pulses with a phase lock loop (PLL). The purpose is to reduce flutter by synchronization to get rid of the low frequency transport noise.

The exposure durations during the sub-lines for recording a grey level pixel are mixed between large and then followed by relatively shorter duration exposures which contribute to electrophotographic process stability. Thermal problems are minimized by reducing current requirements to the printhead through staggering of the enablement times during each sub-line exposure period. The duration of each sub-line exposure period is kept uniform to simplify the clocking of data to the printhead yet the duration of each sub-line exposure period is of relatively short duration. The advantages of grey level printing using an inexpensive binary printhead are thus inexpensively and efficiently realized and requirements for memory for formatting corrected data to the printhead are reduced.

The specific exposure times and resolution dimensions identified numerically are provided as exemplary and, of course, may be optimized for the appropriate printhead. As has been shown, exposure correction to compensate for non-uniformities in the LED's or drivers may be accomplished through modifying of data for each LED at each grey level. The advantages of process stability are attained even where the exposures for the sub-lines are concurrent.

While the invention has been illustrated in connection with an electrophotographic apparatus, other non-impact dot matrix printers such as thermal, electrographic, etc. may also make use of the invention described herein.

The encoder means may be of the type described herein, wherein each line of printing is "tracked" relative to actual photoconductor movement or wherein an encoder signal is "tracked" at the beginning of each frame and pulses artificially created for each line in accordance with approximate photoconductor movement. Alternatively, the encoder may provide pulses at each sub-line interval.

Still other variations may include the use of say 6-bits per pixel data with an addition of two color internal bits for cyan, magenta, yellow, black to form the 8-bits grey level input data so that one process look-up table can be used for all four colors in a color printer printing with those respective colored toners. A further extension may be the loading of the process look-up table with updated data based on changes in process conditions such as humidity which effects development of the electroscopic toners. This can be done, without changing the uniformity look-up table which is specific printhead-related and can be a plug in ROM. With the use of RAM type memories for the uniformity look-up table 118, changes can be made to it based on measured thermal gradients on the printhead. A further flexibility to the system described herein is that a different bit depth grey level value from 4-bits to 8-bits per pixel per color can be used, depending upon how much DRAM memory is provided for the framestore or page memory 146.

Still further modifications may include having all the driver chips to one side of the line of LED's and streaming data serially a single data bit at a time as described above but with the data bits for odd and even LED's being one right after the other. Two enable times are described above for enabling odd and even LED's separately in time could still be provided to limit current to the printhead. In such an example, each driver chip would have suitable circuitry for receiving two strobe enable lines, one for odd-numbered LED's and the other for even-numbered LED's driven by that driver chip. The advantage to this is in eliminating the extra 8 to 1 multiplexer as well as only requiring one set of uniformity and process look-up tables with need for only 8-bit latches.

The embodiment of FIGS. 6-10 may also be modified into a system where 32 bits rather than 16 are handled simultaneously. In such a case, the multiplexer would access data for high-numbered LED's odd and even and for low-numbered LED's odd and even in one 32-bit transfer rather than the 16-bit described herein.

The invention has been described in detail with particular reference to preferred embodiments thereof, but it will be understood that variations and modifications can be effected within the scope of the invention as defined in the claims.

## Claims

1. A non-impact recording apparatus comprising:
a binary architectured printhead including
a) a plurality of recording elements;
b) a respective register means associated with each recording element for storing a single image data bit and cooperating in activating the respective recording element for a predetermined enablement time as determined by a strobe pulse;
c) means including a plurality of independent enable lines for carrying a plurality of strobe timing pulses ;
d) an enabling means for enabling a recording element in response to a data bit stored in the respective register means and to a strobe timing pulse;
e) means coupling a respective recording element to a respective enable line;
driving means for driving said binary architectured printhead to record grey level pixels using plural sub-lines to record each grey level pixel; said driving means including
a) means for generating a new set of sub-line binary data signals for each sub-line of recording and for conveying such signals to the printhead for storing in said respective register means; and
b) means for generating on each enable line a repeating series of strobe timing pulses, the series of pulses being a set of pulses of different durations for use in recording a grey level pixel, a pulse from the set being generated during a sub-line exposure period on each enable line and each enable line having a pulse from said set generated thereon that is a different duration than that generated on the other enabling lines during said sub-line recording period and wherein during a sub-line exposure period the respective pulses on the enabling lines are substantially nonconcurrent.

2. The apparatus of Claim 1 and wherein the duration of the strobe pulses in the set are relatively binary weighted in time.

3. The apparatus of Claims 1 or 2 and wherein a sum of the strobe pulse durations on three of the enable lines during a sub-line recording period are less than the duration of the strobe pulse on a fourth enabling line during said period.

4. The apparatus of Claims 1 or 2 and wherein there are a plural number N of recording elements per inch in a main scanning direction and control means are provided for moving a recording medium relative to said recording elements for generating new sub-lines of data for recording on said recording medium at a rate of P sub-lines per inch, wherein P is larger than N.

5. The apparatus of Claims 1 or 2 and wherein on each enable line the order of the strobe timing pulses are such that longer duration strobe timing pulses are directly followed by shorter duration strobe timing pulses.

6. A non-impact recording apparatus comprising:
a binary architectured printhead including
(a) a plurality of recording elements, each for recording a pixel;
(b) a respective register means associated with each recording element for storing a single image data bit and cooperating in activating the respective recording element for a predetermined enablement time as determined by a strobe pulse;
(c) means for carrying a plurality of strobe timing pulses;
(d) an enabling means for enabling a recording element in response to a data bit stored in the respective register means and one of said strobe timing pulses;
(e) means coupling a respective recording element to said enabling means;
driving means for driving said binary architectured printhead to record grey level pixels using plural sub-lines to record each grey levela pixel; said driving means including
a) means for generating a new set of sub-line binary data signals for each sub-line of recording and for conveying such signals to the printhead for storing in said respective register means; and
b) means for generating a repeating series of substantially binary weighted in time strobe timing pulses, the pulses in the set being arranged in time, out of binary weighted order, so that the longer duration strobe timing pulses of said set are directly followed by shorter duration strobe timing pulses of said set.

7. A non-impact recording apparatus comprising:
a) a plurality of recording elements arranged in a single row with odd and even-numbered recording elements alternating in the row;
b) means for providing image data signals for use in enabling a recording element to record;
c) control means for providing strobe signals for use in enabling the recording elements to record for predetermined periods of time;
d) logic means for combining an image data signal and a strobe signal for causing a recording element to be enabled for recording; and
e) characterized in that the control means, during recording of a line provides strobe signals for the odd and even-numbered elements at different times so as to substantially not overlap in time.

8. The recording apparatus of Claim 7 and wherein the control means provides strobe signals so that during recording of the line the strobe signals for high odd-numbered recording elements are provided at different times than those for the low odd-numbered recording elements.

9. The recording apparatus of Claim 8 and wherein the control means provides strobe signals so that during recording of the line the strobe signals for high even-numbered recording elements are provided at different times than those for low even-numbered recording elements.

10. The apparatus of Claims 7, 8 or 9 and wherein the strobe signals for all recording elements comprises a set of plural different time periods and wherein a recording element is enabled by the logic means for such set of periods in a predetermined order in recording of the line.

11. The apparatus of Claim 10 and wherein adjacent recording elements are enabled for different periods from said set during recording of a sub-line of said line.

## Patentansprüche

1. Berührungsloses Aufzeichnungsgerät mit
- einem Druckkopf mit Binärarchitektur bestehend aus
a) mehreren Aufzeichnungselementen;
b) den einzelnen Aufzeichnungselementen zugeordneten Registern zum Speichern eines einzelnen Bilddatenbits und zur Mitwirkung beim Aktivieren des jeweiligen Aufzeichnungselements für eine vorgegebene, durch einen Strobe-Impuls festgelegte Freigabezeit;
c) einer Vielzahl von unabhängige Freigabeleitungen aufweisenden Mitteln, die eine Vielzahl von Strobe-Taktimpulsen führen;
d) einem Freigabemittel zum Freigeben eines Aufzeichnungselements in Abhängigkeit von einem im jeweiligen Register gespeicherten Datenbit und einem Strobe-Taktimpuls;
e) Mitteln, die die jeweiligen Aufzeichnungselemente mit den jeweiligen Freigabeleitungen verbinden;
- Teibermitteln für den Druckkopf, um Graustufenpixel unter Verwendung mehrerer Teillinien für die Aufzeichnung jedes Graustufenpixels aufzuzeichnen; wobei die Treibermittel folgende Komponenten aufweisen:
aa) Mittel zum Erzeugen einer neuen Gruppe von Teillinien-Binärdatensignalen für jede Teillinie der Aufzeichnung und zum Weiterleiten der Signale zum Druckkopf, um sie im jeweiligen Register zu speichern; und
bb) Mittel zum Erzeugen in jeder Freigabeleitung einer sich wiederholenden Folge von Strobe-Taktimpulsen, die eine Gruppe von Impulsen unterschiedlicher Dauer zur Verwendung bei der Aufzeichnung eines Graustufenpixels bildet, wobei ein Impuls der Gruppe während einer Teillinien-Belichtungsperiode in jeder Freigabeleitung erzeugt wird und jede Freigabeleitung einen Impuls der darin erzeugten Gruppe aufweist, der gegenüber dem in den anderen Freigabeleitungen während der Teillinien-Aufzeichnungsperiode erzeugten Impuls von unterschiedlicher Dauer ist, und wobei während einer Teillinien-Belichtungsperiode die jeweiligen Impulse in den Freigabeleitungen im wesentlichen zeitlich nicht zusammenfallen.

2. Aufzeichnungsgerät nach Anspruch 1, dadurch gekennzeichnet, daß die Dauer der Strobe-Impulse in der Gruppe zueinander zeitlich binärgewichtet sind.

3. Aufzeichnungsgerät nach Anspruch 1 oder 2, dadurch gekennzeichnet, daß die Summe der Strobe-Impulsdauer in drei der Freigabeleitungen während einer Teillinien-Aufzeichnungsperiode geringer ist als die Dauer des Strobe-Impulses in einer vierten Freigabeleitung während dieser Periode.

4. Aufzeichnungsgerät nach Anspruch 1 oder 2, dadurch gekennzeichnet, daß in einer Hauptabtastrichtung eine Vielzahl N von Aufzeichnungselementen pro Längeneinheit vorhanden ist und Steuermittel zum Bewegen eines Aufzeichnungsmediums relativ zu den Aufzeichnungselementen vorgesehen sind, um neue Teillinien von Daten zu erzeugen und diese auf dem Aufzeichnungsmedium mit einer Rate von P Sublines pro Längeneinheit aufzuzeichnen, wobei P > N.

5. Aufzeichnungsgerät nach Anspruch 1 oder 2, dadurch gekennzeichnet, daß in jeder Freigabeleitung die Reihenfolge der Strobe-Taktimpulse derart vorgegeben ist, daß auf Impulse mit längerer Dauer unmittelbar Impulse mit kürzerer Dauer folgen.

6. Berührungsloses Aufzeichnungsgerät mit
- einem Druckkopf mit Binärarchitektur bestehend aus
a) mehreren Aufzeichnungselementen, von denen jedes ein Pixel aufzeichnet;
b) den einzelnen Aufzeichnungselementen zugeordneten Registern zum Speichern eines einzelnen Bilddatenbits und zur Mitwirkung beim Aktivieren des jeweiligen Aufzeichnungselements für eine vorgegebene, durch einen Strobe-Impuls festgelegte Freigabezeit;
c) Mitteln, die eine Vielzahl von Strobe-Taktimpulsen führen;
d) einem Freigabemittel zum Freigeben eines Aufzeichnungselements in Abhängigkeit von einem im jeweiligen Register gespeicherten Datenbit und einem der Strobe-Taktimpulse;
e) Mitteln, die die jeweiligen Aufzeichnungselemente mit den Freigabemitteln verbinden;
- Teibermitteln für den Druckkopf, um Graustufenpixel unter Verwendung mehrerer Teillinien für die Aufzeichnung jedes Graustufenpixels aufzuzeichen; wobei die Treibermittel folgende Komponenten aufweisen:
aa) Mittel zum Erzeugen einer neuen Gruppe von Teillinien-Binärdatensignalen für jede Teillinie der Aufzeichnung und zum Weiterleiten der Signale zum Druckkopf, um sie im jeweiligen Register zu speichern; und
bb) Mittel zum Erzeugen einer sich wiederholenden Folge von im wesentlichen zeitlich binärgewichteten Strobe-Taktimpulsen, wobei die Impulse der Gruppe zeitlich, aber nicht in der Reihenfolge der Binärgewichtung geordnet sind, so daß auf die Impulse der Gruppe mit längerer Dauer unmittelbar Impulse der Gruppe mit kürzerer Dauer folgen.

7. Berührungsloses Aufzeichnungsgerät mit
a) einer Vielzahl von in einer einzigen Zeile angeordneten Aufzeichnungselementen, wobei sich ungeradzahlige und geradzahlige Aufzeichnungselemente in der Zeile abwechseln;
b) Mitteln zum Erzeugen von Bilddatensignalen, um ein Aufzeichnungselement für die Aufzeichnung freizugeben;
c) Steuermitteln zum Erzeugen von Strobe-Signalen für die Freigabe der Aufzeichnungselemente zur Aufzeichnung während vorgegebener Zeitabschnitte;
d) einer Logik zum Verknüpfen eines Bilddatensignals mit einem Strobe-Signal, um zu bewirken, daß ein Aufzeichnungselement zur Aufzeichnung freigegeben wird;
dadurch gekennzeichnet, daß
e) die Steuermittel während der Aufzeichnung einer Zeile zu unterschiedlichen Zeiten Strobe-Signale für die ungeradzahligen und geradzahligen Elemente erzeugen, so daß sich diese zeitlich nicht überdecken.

8. Aufzeichnungsgerät nach Anspruch 7, dadurch gekennzeichnet, daß die Steuermittel Strobe-Signale erzeugen, wobei während der Aufzeichnung der Zeile die Strobe-Signale für die höheren ungeradzahligen Aufzeichnungselemente gegenüber jenen für die niedrigeren ungeradzahligen Aufzeichnungselemente zu unterschiedlichen Zeiten erzeugt werden.

9. Aufzeichnungsgerät nach Anspruch 8, dadurch gekennzeichnet, daß die Steuermittel Strobe-Signale erzeugen, wobei während der Aufzeichnung der Zeile die Strobe-Signale für die höheren geradzahligen Aufzeichnungselemente gegenüber jenen für die niedrigeren geradzahligen Aufzeichnungselemente zu unterschiedlichen Zeiten erzeugt werden.

10. Aufzeichnunggerät nach Anspruch 7, 8 oder 9, dadurch gekennzeichnet, daß die Strobe-Signale für jedes der Aufzeichnungselemente eine Gruppe einer Vielzahl von unterschiedlichen Zeitperioden einschließen, und daß das jeweilige Aufzeichnungselement durch die Logik für diese Gruppe von Zeitperioden in vorgegebener Reihenfolge bei der Aufzeichnung der Zeile freigegeben wird.

11. Aufzeichnungsgerät nach Anspruch 10, dadurch gekennzeichnet, daß bei der Aufzeichnung einer Teillinie der Zeile jeweils benachbarte Aufzeichnungselemente während unterschiedlicher Zeitperioden der Gruppe freigegeben werden.

## Revendications

1. Appareil d'enregistrement sans impact comportant :
une tête d'impression à architecture binaire comprenant
a) une pluralité d'éléments d'enregistrement,
b) un registre respectif associé à chaque élément d'enregistrement destiné à mémoriser un bit de données d'image unique et à concourir à l'activation de l'élément d'enregistrement respectif pendant une durée de validation prédéterminée telle que déterminée par une impulsion de transfert,
c) un moyen comprenant une pluralité de lignes de validation indépendantes destiné à transporter une pluralité d'impulsions de cadencement de transfert,
d) un moyen de validation destiné à valider un élément d'enregistrement en réponse à un bit de données mémorisé dans le registre respectif et à une impulsion de cadencement de transfert,
e) un moyen couplant un élément d'enregistrement respectif à une ligne de validation respective,
un moyen d'excitation destiné à exciter ladite tête d'enregistrement à architecture binaire afin d'enregistrer des pixels de niveau de gris en utilisant plusieurs sous-lignes afin d'enregistrer chaque pixel de niveau de gris, ledit moyen d'excitation comprenant
a) un moyen destiné à engendrer un nouvel ensemble de signaux de données binaires de sous-lignes pour chaque sous-ligne d'enregistrement et à acheminer de tels signaux vers la tête d'impression en vue d'une mémorisation dans ledit registre respectif, et
b) un moyen destiné à engendrer sur chaque ligne de validation une série répétitive d'impulsions de cadencement de transfert, les séries d'impulsions constituant un ensemble d'impulsions de durées différentes destiné à être utilisé dans l'enregistrement d'un pixel de niveau de gris, une impulsion provenant de l'ensemble étant engendrée pendant une période d'exposition de sous-ligne sur chaque ligne de validation et chaque ligne de validation comportant une impulsion provenant dudit ensemble engendrée sur celle-ci qui est d'une durée différente de celle engendrée sur les autres lignes de validation pendant ladite période d'enregistrement de sous-ligne et dans lequel pendant une période d'exposition de sous-ligne les impulsions respectives sur les lignes de validation sont pratiquement non concordantes.

2. Appareil selon la revendication 1 et dans lequel la durée des impulsions de transfert de l'ensemble sont pondérées relativement de façon binaire dans le temps.

3. Appareil selon la revendication 1 ou la revendication 2 et dans lequel une somme des durées d'impulsions des transferts sur trois des lignes de validation pendant une période d'enregistrement de sous-ligne, est inférieure à la durée de l'impulsion de transfert sur une quatrième ligne de validation pendant ladite période.

4. Appareil selon la revendication 1 ou la revendication 2 et dans lequel il existe un nombre N multiple d'éléments d'enregistrement par pouce dans un sens de balayage principal et un moyen de commande est prévu dans le but de déplacer un support d'enregistrement par rapport auxdits éléments d'enregistrement afin d'engendrer de nouvelles sous-lignes de données destinées à l'enregistrement sur ledit support d'enregistrement à une vitesse de P sous-lignes par pouce, dans lequel P est plus grand que N.

5. Appareil selon la revendication 1 ou la revendication 2 et dans lequel sur chaque ligne de validation, l'ordre des impulsions de cadencement de transfert est tel que les impulsions de cadencement de transfert à durée plus longue sont directement suivies d'impulsions de cadencement de transfert à durée plus courte.

6. Appareil d'enregistrement sans impact comprenant :
une tête d'impression à architecture binaire comportant
a) une pluralité d'éléments d'enregistrement, chacun étant destiné à l'enregistrement d'un pixel,
b) un registre respectif associé à chaque élément d'enregistrement destiné à mémoriser un bit de données d'image unique et à concourir à l'activation de l'élément d'enregistrement respectif pendant une durée de validation prédéterminée telle que déterminée par une impulsion de transfert,
c) un moyen destiné à transporter une pluralité d'impulsions de cadencement de transfert,
d) un moyen de validation destiné à valider un élément d'enregistrement en réponse à un bit de données mémorisé dans le registre respectif et à l'une desdites impulsions de cadencement de transfert,
e) un moyen couplant un élément d'enregistrement respectif audit moyen de validation,
un moyen d'excitation destiné à exciter ladite tête d'impression à architecture binaire afin d'enregistrer des pixels de niveau de gris en utilisant plusieurs sous-lignes afin d'enregistrer chaque pixel de niveau de gris, ledit moyen d'excitation comprenant
a) un moyen destiné à engendrer un nouvel ensemble de signaux de données binaires de sous-lignes pour chaque sous-ligne d'enregistrement et à acheminer de tels signaux vers la tête d'impression en vue d'une mémorisation dans ledit registre respectif, et
b) un moyen destiné à engendrer une série répétitive d'impulsions de cadencement de transfert pratiquement pondérées dans le temps de façon binaire, les impulsions de l'ensemble étant réparties dans le temps, à partir d'un ordre de pondération binaire, de façon à ce que les impulsions de cadencement de transfert de durée plus longue dudit ensemble soient suivies directement d'impulsions de cadencement de transfert de durée plus courte dudit ensemble.

7. Appareil d'enregistrement sans impact comprenant :
a) une pluralité d'éléments d'enregistrement agencés suivant une rangée unique avec des éléments d'enregistrement numérotés impairs et pairs en alternance dans la rangée,
b) un moyen pour procurer des signaux de données d'image destiné à être utilisé en validant un élément d'enregistrement à enregistrer,
c) un moyen de commande pour procurer des signaux de transfert destiné à être utilisé en validant les éléments d'enregistrement à enregistrer pendant des périodes prédéterminées de temps,
d) un moyen logique destiné à combiner un signal de données d'image et un signal de transfert afin d'amener un élément d'enregistrement à être validé pour l'enregistrement, et
e) caractérisé en ce que le moyen de commande, pendant l'enregistrement d'une ligne, procure les signaux de transfert destinés aux éléments numérotés impairs et pairs à différents instants de façon à ne pratiquement pas se recouvrir dans le temps.

8. Appareil d'enregistrement selon la revendication 7 et dans lequel le moyen de commande procure des signaux de transfert de telle façon que pendant l'enregistrement de la ligne, les signaux de transfert destinés aux éléments d'enregistrement à numérotation impaire élevée sont procurés à des instants différents de ceux destinés aux éléments d'enregistrement à numérotation impaire basse.

9. Appareil d'enregistrement selon la revendication 8 et dans lequel le moyen de commande procure des signaux de transfert de telle façon que pendant l'enregistrement de la ligne, les signaux de transfert destinés aux éléments d'enregistrement à numérotation paire élevée sont procurés à des instants différents de ceux destinés aux éléments d'enregistrement à numérotation paire basse.

10. Appareil selon les revendications 7, 8 ou 9 et dans lequel les signaux de transfert destinés à tous les éléments d'enregistrement sont constitués d'un ensemble de plusieurs périodes de temps différentes et dans lequel un élément d'enregistrement est validé par le moyen logique pendant un tel ensemble de périodes dans un ordre prédéterminé lors de l'enregistrement de la ligne.

11. Appareil selon la revendication 10 et dans lequel les éléments d'enregistrement contigus sont validés pendant des périodes différentes dudit ensemble pendant l'enregistrement d'une sous-ligne de ladite ligne.
